Europäisches Patentamt

European Patent Office    (11)   Numéro de publication:    **0 332 675**
**B1**

Office européen des brevets

(12)    **FASCICULE DE BREVET EUROPEEN**

(45)   Date de publication du fascicule du brevet:     (51)   Int. Cl.⁵: **G21C 3/16**
**14.11.90**

(21)   Numéro de dépôt: **88907716.0**

(22)   Date de dépôt: **31.08.88**

(86)   Numéro de dépôt international:
**PCT/FR 88/00430**

(87)   Numéro de publication internationale:
**WO 89/02152 (89.03.09 Gazette 89/6)**

---

(54)   **COEUR DE REACTEUR NUCLEAIRE A NEUTRONS RAPIDES AVEC GAIN DE REGENERATION AMELIORE ET TAUX DE COMBUSTION ACCRU.**

(30)   Priorité: **02.09.87 FR 8712201**

(43)   Date de publication de la demande:
**20.09.89 Bulletin 89/38**

(45)   Mention de la délivrance du brevet:
**14.11.90 Bulletin 90/46**

(84)   Etats contractants désignés:
**DE GB IT**

(56)   Documents cités:
**DE-A- 1 957 090**
**FR-A- 2 401 492**
**FR-A- 2 553 224**
**FR-A- 2 568 713**
**US-A- 4 273 616**

(73)   Titulaire: **FRAMATOME, Tour Fiat 1, Place de la Coupole,**
**F-92400 Courbevoie(FR)**

(72)   Inventeur: **SZTARK, Henri, Bâtiment Lulli Résidence**
**Parc-de-la-Challin, F-69130 Ecully(FR)**
**Inventeur: MARCON, Jean-Pierre, 45, avenue Foch,**
**F-69006 Lyon(FR)**

(74)   Mandataire: **Mongrédien, André et al, c/o**
**BREVATOME 25, rue de Ponthieu, F-75008 Paris(FR)**

---

## Description

La présente invention a pour objet un coeur de réacteur nucléaire à neutrons rapides présentant des caractéristiques améliorées, notamment en ce qui concerne un taux de combustion accru, tout en présentant également un gain de régénération amélioré.

Elle peut s'appliquer en transformant un coeur de réacteur à neutrons rapides tel que celui décrit dans le brevet français FR-A-2 568 713 au nom de la société Novatome. Le coeur du réacteur est de forme générale cylindrique à axe vertical et il est constitué d'assemblages combustibles juxtaposés parcourus par du sodium liquide de refroidissement et munis de pieds fichés dans des chandelles d'un sommier utilisé également comme collecteur d'alimentation de sodium.

Les assemblages combustibles contiennent des aiguilles verticales formées de gaines tubulaires minces garnies intérieurement de matériau combustible. Ce matériau n'est pas homogène et on peut distinguer, en faisant abstraction de détails localisés tels que les barres de commande, une zone de matériau fertile à la périphérie de coeur cylindrique (composée de deux couvertures axiales et d'une couverture radiale) et une zone centrale principalement en matériau fissile, mais qui comprend encore des portions de matériau fertile disposées, par exemple, en couches planes parallèles aux couvertures axiales.

Le matériau fissile utilisé est un mélange d'oxydes d'uranium 235 et de plutonium ($UO_2$ et $PuO_2$), ou un seul de ces oxydes. Le matériau fertile utilisé dans ces coeurs déjà connus est de l'oxyde d'uranium appauvri. Tous ces matériaux sont insérés dans les gaines sous forme de pastilles.

Au cours de la combustion, du plutonium se crée dans le combustible fertile alors, que le plutonium créé dans le combustible fissile ne suffit pas à compenser celui qui a brûlé. C'est pourquoi la réactivité du coeur diminue progressivement et il est nécessaire de remplacer relativement fréquemment le combustible du coeur en acceptant un taux de combustion moins favorable que souhaité et un gain de régénération peu élevé.

L'interposition de couches fertiles au sein de la matière fissile permet, en réduisant l'enrichissement moyen, de freiner sensiblement la chute de réactivité du coeur et d'améliorer le gain de régénération, car l'irradiation des couches fertiles renouvelle le combustible du coeur tout en créant du plutonium récupérable. Ces couches fertiles peuvent être constituées par du nitrone d'uranium, du carbure d'uranium, en par trente autre substance fertile ayant une densité supérieure à 13, tel que décrit dans FR-A 2 553 224.

Toutefois, il est encore possible d'améliorer le taux de combustion le gain de régénération d'un tel coeur et de diminuer la corrosion des gaines ce qui constitue l'objet essentiel de la présente invention suivant la revendication 1.

On va maintenant décrire l'invention à l'aide des figures suivantes, annexées à titre illustratif et nullement limitatif :

- la figure 1 représente une vue générale d'un coeur de réacteur nucléaire à neutrons rapides,
- les figures 2 et 2A représentent deux réalisations d'aiguilles selon l'invention,
- la figure 3 est un diagramme représentant, au début et à la fin de l'irradiation du coeur, la répartition de puissance obtenue le long de l'axe du coeur.

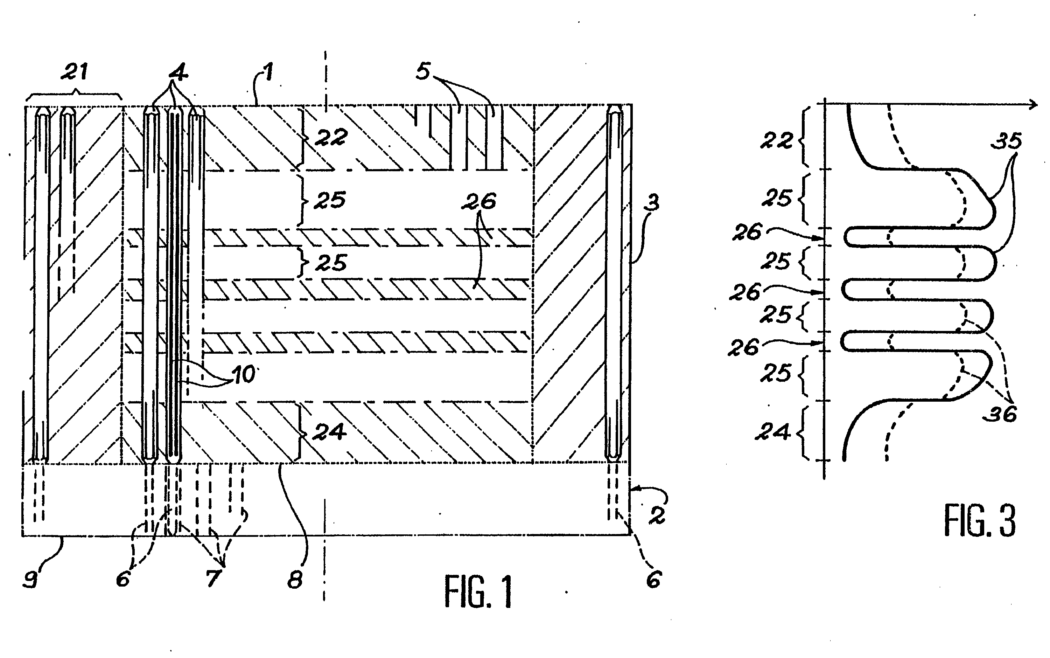

La figure 1 représente donc un coeur de réacteur nucléaire de forme cylindrique délimité en haut par une plaque d'instrumentation 1, en bas par un sommier 2, et radialement par une virole 3. Il est rempli d'assemblages combustibles 4 que l'on introduit par des orifices 5 de la plaque d'instrumentation 1 et dans lesquels ils sont maintenus en place avec un faible jeu.

Les assembles combustibles 4 sont des tubes longs à section hexagonale, à l'exception de leur partie inférieure 6 qui constitue un pied tubulaire cylindrique de révolution et qui est de plus petite section que la partie hexagonale. Les pieds 6 sont introduits dans des tubes entretoises 7 disposés entre deux plaques superposées 8 et 9 qui constituent le sommier 2. Les pieds 6 et les tubes entretoises 7 contribuent donc à assurer la stabilité des assemblages combustibles 4. Ils sont percés d'orifices calibrés non représentés et permettent d'assurer le pasage de sodium liquide froid sous pression, préalablement injecté entre les plaques superposées 8 et 9 par un système d'alimentation dans l'intérieur des assemblages combustibles 4.

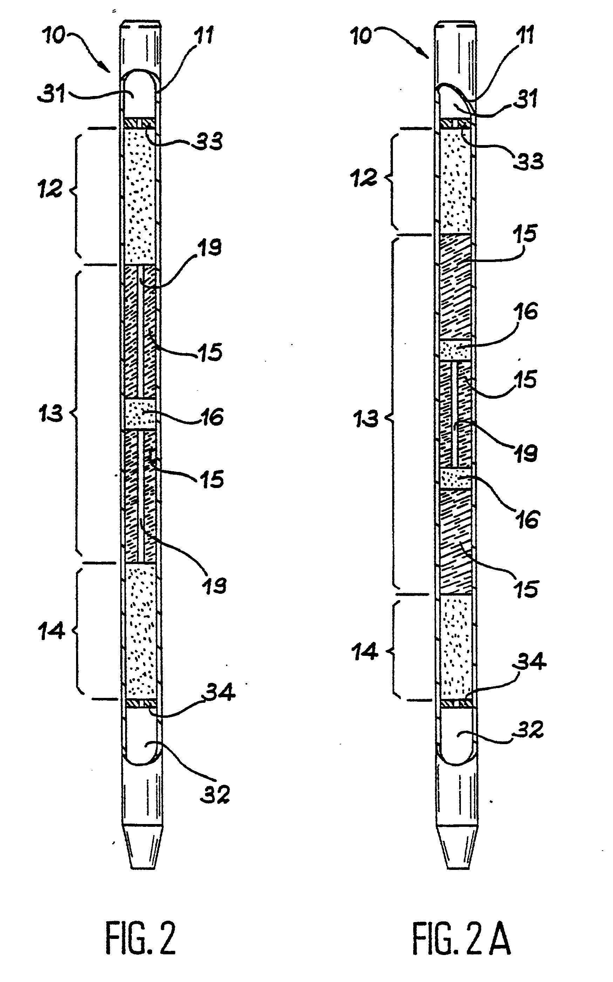

Le sodium liquide vient alors baigner des aiguilles verticales 10 installées dans les assemblages combustibles 4. Ces aiguilles 10 se composent, comme on le voit sur les figures 2 et 2A, d'une gaine en acier de faible épaisseur 11 (quelques dixièmes de millimètre) dans lesquelles on empile des pastilles de combustible.

Les aiguilles 10 appartenant aux assemblages combustibles 4 périphériques sont emplies de patilles de matériau fertile; les autres sont emplies successivement, de haut en bas, d'une couche supérieure 12 de pastilles de matériau fertile, d'une couche médiane 13 de pastilles principalement de matériau fissile, et d'une couche inférieure 14 de pastilles de matériau fertile. La couche médiane 13 comprend cependant une pluralité de segments de matériau fissile 15 séparés par des segments de matériau fertile 16 de plus faible hauteur.

Sur la figure 2, on observe ainsi deux segments de matériau fissile 15 et un segment de matériau fertile 16 intermédiaire à mi-longueur de l'aiguille 10 ; sur la figure 2A on observe trois segments égaux de matériau fissile 15 et deux segments de matériau fertile 16. Un plus grand nombre de segments 15 et 16 est tout à fait concevable et les représentations des figures 2 et 2A ne sont données qu'à titre d'exemple. Dans une réalisation possible, les hauteurs sont 100 mm pour chacune des couches supérieure et inférieure 12 et 14, 300 à 500 mm pour chacun des segments de matériau fissile 15 et 150 à 200 mm pour chacun des segments de matériau fertile 16, la hauteur totale de la couche médiane étant 1 600 mm.

Si on revient à la figure 1, on constate ainsi que les aiguilles périphériques 10 emplies uniquement de matériau fertile constituent une couverture radiale 21, que l'ensemble des couches supérieure et inférieure de matériau fertile 12 et 14 constitue deux couvertures axiales 22 et 24, et que l'ensemble des segments de matériaux fissile et fertile 15 et 16 délimite des couches médianes 25 et 26 horizontales et alternées.

Le matériau fertile des segments 16 est choisi parmi le nitrure d'uranium, le carbure d'uranium et le carbonitrure d'uranium, l'uranium étant au taux d'enrichissement (0,25 % d'$^{235}$U) habituel pour ces zones fertiles 16.

Avantageusement, les couvertures axiales 22 et 24, ou la couverture radiale 21, ou encore toutes ces couvertures, peuvent également être choisies parmi le nitrure d'uranium, le carbure d'uranium et le carbonitrure d'uranium.

Les segments de matériau fissile 15 sont classiquement un mélange d'oxyde d'uranium enrichi $UO_2$ et de plutonium enrichi $PuO_2$.

On peut expliquer le fonctionnement de ce coeur comme suit. L'épuisement progressif du combustible contenu dans les segments de matériau fissile 15 libère de l'oxygène qui migre à l'intérieur de ces segments 15. Une partie de cet oxygène tend à être absorbée par les gaines 11 et à les corroder. Comme les gaines 11 travaillent à température élevée (650 à 700°C) et sous des sollicitations importantes dues à la pression des gaz de fission, l'amincissement qui résulte de la corrosion peut conduire à leur rupture, ce qui est très gênant et donc à éviter pour l'exploitation du réacteur.

Cette corrosion des gaines 11 est empêchée par l'emploi de matériau fertile parmi ceux mentionnées. Le potentiel oxygène du système constitué par la matière fissile et la matière fertile est en effet très bas, plus bas que celui du fer ou du chrome généralement allié à l'acier des gaines 11.

L'oxygène dégagé par la combustion des segments de matériau fissile 15 se fixe donc sur le matériau fertile et produit, dans le cas où on emploie du nitrure d'uranium, un dégagement d'azote inoffensif. La fixation a lieu surtout sur les segments intermédiaires de matériau fertile 16 ; l'invention s'applique donc en priorité à ces segments. Toutefois, on peut également avantageusement décider que les couches supérieure 12 ou inférieure 14 de matériau fertile constituant les couvertures axiales 22 et 24, ou même le matériau fertile constituant la couche radiale 21, seront constituées de ces matériaux à très bas potentiel oxygène. Ce n'est toutefois pas nécessaire, car il suffit que le matériau fertile selon l'invention occupe un volume égal à environ 20% du volume des segments de matériau fissile 15 pour que tout l'oxygène puisse être absorbé, d'autant plus que la température élevée dans les assemblages combustibles 4 favorise cette absorption.

Les segments de matériau fissile 15 sont traversés axialement par un trou central 19 débouchant sur les segments de matériau fertile 16 ou suivant le cas, sur les couches supérieure 12 ou inférieure 14. La diffusion axiale de l'oxygène vers la matière fertile qui l'absorbe est nettement facilitée.

Les gaz non oxydants finalement dégagés par l'oxydation de la matière fertile aboutissent aux extrémités 31 et 32 des gaines 11, respectivement au-dessus de la couche supérieure fertile 12 et au-dessous de la couche inférieure fertile 14, dont elles sont séparées par des bouchons d'acier 33 et 34 percés d'un trou axial et qui sont inoccupées pour servir de chambres d'évacuation aux gaz dégagés.

L'emploi de matériaux fertiles denses conformes à l'invention intercalés entre le combustible fissile permet également d'obtenir un meilleur aplatissement axial de la puissance fournie, un meilleur gain de régénération du combustible et finalement une chute de réactivité nulle.

C'est ce que représente la figure 3 ; la courbe en traits pleins 35 représente, en fonction de la position axiale dans le coeur, la répartition de puissance fournie au début du fonctionnement de l'installation ; la courbe en tirets 36 représente la même grandeur à la fin du fonctionnement de l'installation, quand le combustible est irradié. On voit que la puissance totale est sensiblement la même, la création de combustible fissile dans les parties fertiles compensant l'épuisement progressif du combustible dans le matériau fissile, et que d'autre part les couches fissiles émettent toutes sensiblement la même densité de puissance.

En conclusion, le choix d'un matériau fertile absorbeur d'oxygène permet d'obtenir un coeur nucléaire plus satisfaisant sous plusieurs aspects.

**Revendications**

1. Coeur de réacteur nucléaire à neutrons rapides comprenant des assemblages combustibles (4) munis d'aiguilles (10) constituées d'une gaine d'acier (11) renfermant des matériaux fissiles et fertiles, les matériaux fissiles étant choisis parmi l'oxyde de plutonium et/ou l'oxyde d'uranium, dans lequel les aiguilles (10) périphériques sont emplies de matériau fertile et constituent une couverture radiale (21) et les aiguilles (10) centrales sont emplies de matériau fertile aux deux extrémités, constituant deux couvertures axiales (22, 24), et d'une alternance de segments de matériau fissile (15) et fertile (16) entre ces extrémités, le matériau des segments de matériau fertile (16) étant choisi parmi le nitrure d'uranium, le carbure d'uranium et le carbonitrure d'uranium, caractérisé en ce que les segments de matériau fissile (15) des aiguilles (10) centrales sont traversés d'un conduit longitudinal (19) débouchant sur les segments de matériau fertile (16).

2. Coeur de réacteur nucléaire a neutrons rapides selon la revendication 1, caractérisé en ce que le matériau fertile des couvertures axiales (22, 24) est choisi parmi le carbure d'uranium, le nitrure d'uranium et le carbonitrure d'uranium.

3. Coeur de réacteur nucléaire à neutrons rapides selon l'une quelconque des revendications 1 ou 2, caractérisé en ce que le matériau fertile de la couverture radiale (21) est choisi parmi le carbure d'uranium, le nitrure d'uranium et le cabonitrure d'uranium.

4. Coeur de réacteur nucléaire selon l'une quelconque des revendications 1 a 3, caractérisé en ce que les segments de matériau fissile (15) des aiguilles (10) centrales sont au nombre de deux, séparées par un segment unique de matériau fertile (16) à mi-longueur de l'aiguille (10).

5. Coeur de réacteur nucléaire selon l'une quelconque des revendications 1 a 3, caractérisé en ce que les segments de matériau fissile (15) des aiguilles (10) centrales sont au nombre de trois et de longueurs égales, et sont séparés par deux segments de matériau fertile (16).

**Patentansprüche**

1. Herz eines schnellen Brutreaktors, das Ansammlungen von spaltbaren Materialien (4) aufweist, die ausgestattet sind mit Nadeln (10) aus einem Stahlmantel (11), der spaltbare und brütbare Materialien enthält, wobei die spaltbaren Materialien ausgewählt werden aus Plutoniumoxid und/oder Uranoxid, in dem die peripheren Nadeln (10) mit einem brütbaren Material gefüllt sind und eine radiale Abdeckung (21) darstellen und die zentralen Nadeln (10) an beiden Enden mit brütbarem Material gefüllt sind, die zwei axiale Abdeckungen (22, 24) darstellen, und alternierenden Segmenten aus spaltbarem Material (15) und brütbarem Material (16) zwischen diesen Enden, wobei das Material der Segmente aus brütbarem Material (16) ausgewählt wird aus Urannitrid, Urancarbid und Urancarbonitrid, dadurch gekennzeichnet, daß die Segmente aus spaltbarem Material (15) der zentralen Nadeln (10) von einer longitudinalen Leitung (19) durchquert werden, die in die Segmente aus brütbarem Material (16) mündet.

2. Herz eines schnellen Brutreaktors nach Anspruch 1, dadurch gekennzeichnet, daß das brütbare Material der axialen Abdeckungen (22, 24) ausgewählt wird aus Urancarbid, Urannitrid und Urancarbonitrid.

3. Herz eines schnellen Brutreaktors nach Anspruch 1 oder 2, dadurch gekennzeichnet, daß das brütbare Material der radialen Abdeckung (21) ausgewählt wird aus Urancarbid, Urannitrid und Urancarbonitrid.

4. Herz eines schnellen Brutreaktors nach einem der Ansprüche 1 bis 3, dadurch gekennzeichnet, daß die Segmente aus spaltbarem Material (15) der zentralen Nadeln (10) zwei an der Zahl sind, die durch ein einziges Segment aus brütbarem Material (16) mit halber Länge der Nadeln (10) voneinander getrennt sind.

5. Herz eines schnellen Brutreaktors nach einem der Ansprüche 1 bis 3, dadurch gekennzeichnet, daß die Segmente aus spaltbarem Material (15) der zentralen Nadeln (10) drei an der Zahl sind und die gleiche Länge haben und daß sie durch zwei Segmente aus brütbarem Material (16) voneinander getrennt sind.

**Claims**

1. Fast-neutron nuclear reactor core comprising fuel assemblies (4) provided with pins (10) consisting of a steel sheath (11) enclosing fissile and fertile materials, the fissile materials being chosen from plutonium oxide and/or uranium oxide, in which the peripheral pins (10) are filled with fertile material and form a radial blanket (21) and the central pins (10) are filled with fertile material at both ends, forming two axial blankets (22, 24) and with an alternation of segments of fissile (15) and fertile (16) material between these ends, the material of the segments of fertile material (16) being chosen from uranium nitride, uranium carbide and uranium carbonitride, characterized in that the segments of fissile material (15) of the central pins (10) have passing through them a lengthwise conduit (19) opening onto the segments of fertile material (16)

2. Fast-neutron nuclear reactor core according to claim 1, characterized in that the fertile material of the axial blankets (22, 24) is chosen from uranium carbide, uranium nitride and uranium carbonitride.

3. Fast-neutron nuclear reactor core according to either of claims 1 and 2, characterized in that the fertile material of the radial blanket (21) is chosen from uranium carbide, uranium nitride and uranium carbonitride.

4. Nuclear reactor core according to any one of claims 1 to 3, characterized in that the segments of fissile material (15) of the central pins (10) are two in number, separated by a single segment of fertile material (16) at mid-length of the pin (10).

5. Nuclear reactor core according to any one of claims 1 to 3, characterized in that the segments of fissile material (15) of the central pins (10) are three in number and of equal lengths, and are separated by two segments of fertile material (16).

FIG. 3

FIG. 1

FIG. 2

FIG. 2 A